# EUROPÄISCHE PATENTSCHRIFT

(11) **EP 2 553 270 B1**
(45) Veröffentlichungstag und Bekanntmachung des Hinweises auf die Patenterteilung: **03.09.2014**
(21) Anmeldenummer: 11713178.9
(22) Anmeldetag: 18.03.2011
(51) Int. Cl.: F04B 49/03

(54) **VENTIL ZUM ALTERNIERENDEN BEFÜLLEN ZWEIER ARBEITSRÄUME EINES KOLBEN-ZYLINDER-SYSTEMS EINER PUMPE**
VALVE FOR ALTERNATELY FILLING TWO WORKING CHAMBERS OF A PISTON-CYLINDER SYSTEM OF A PUMP
SOUPAPE POUR LE REMPLISSAGE ALTERNÉ DE DEUX CHAMBRES DE TRAVAIL D'UN SYSTÈME PISTON-CYLINDRE D'UNE POMPE

(30) Priorität: 26.03.2010 DE 102010013107
(43) Veröffentlichungstag der Anmeldung: 06.02.2013
(73) Patentinhaber: Promera GmbH & Co. Kg, 97526 Sennfeld (DE)
(72) Erfinder: SCHÜTZE, Thomas, 97453 Schonungen (DE)
(74) Vertreter: Lenzing Gerber Stute
(86) Internationale Anmeldenummer: PCT/EP2011/001359
(87) Internationale Veröffentlichungsnummer: WO 2011/116910

(56) Entgegenhaltungen:
- DE-A1- 2 503 277
- DE-A1- 3 206 242
- US-A- 3 763 891
- US-A- 4 385 639
- US-A1- 2005 199 302

## Beschreibung

Die vorliegende Erfindung betrifft ein Ventil zum alternierenden Befüllen zweier Arbeitsräume eines Kolben-Zylinder-Systems einer Pumpe mit einem Fluid, wobei das Ventil zwei Ventilpumpenausgänge zur Verbindung mit den Arbeitsräumen der Pumpe und ein Ventilsteuerelement aufweist, welches in einem Raum eines Ventilgehäuses verschieblich angeordnet und zwischen zwei Endpositionen von einem Fluid angetrieben hin und her bewegbar ist, wobei das Ventilsteuerelement Steuerkanäle aufweist, die mit im Ventilgehäuse angeordneten Gehäusekanälen zusammenwirken, wobei der erste Ventilpumpenausgang mit den Gehäusekanälen und der zweite Ventilpumpenausgang mit den Gehäusekanälen in Verbindung ist.

Gattungsgemäße Ventile werden zum Beispiel zum Befüllen der Arbeitsräume von Membranpumpen und auch Kolbenpumpen benötigt. Bei Membranpumpen begrenzt die Membran einen Förderraum, in den eine Zuführleitung und eine Auslassleitung münden. In der Regel werden Rückschlagventile in den Zuführ- und Auslassleitungen derart angeordnet, dass durch hin und her bewegen der Membran das Fördermedium zunächst über die Zuführleitung in den Förderraum gesaugt und anschließend über die Auslassleitung aus dem Förderraum herausgedrückt werden kann.

Damit eine kontinuierliche Förderung möglich ist, werden meist zwei Membranpumpen parallel geschaltet, wobei die eine das Fördermedium ansaugt und die andere in derselben Zeit das Fördermedium aus ihrem Förderraum herausdrückt.

Es sind zudem Doppelmembranpumpen bekannt, bei denen die Membranen, welche meist als Tellermembranen ausgebildet sind, mittels eines gemeinsamen Kolben-Zylinder-Systems oder mittels eines elektrischen Antriebes verstellt werden. In Räumen, in denen explosive Gase auftreten können, dürfen keine elektrischen Pumpen betrieben werden oder müssen die strengen Forderungen des Ex-Schutzes berücksichtigt werden. Hier werden in der Regel Pneumatikpumpen eingesetzt, bei denen ein Kolben, welcher mit den Membranen mechanisch verbunden ist, mittels Druckluft in einem Zylinder hin und her bewegt wird. Die Druckluft wird dabei mittels eines Hauptventils derart geschaltet, dass die beiden Arbeitsräume abwechselnd mit Druckluft befüllt werden. Eine derartige Pumpe ist aus der US 4,818,191 bekannt. Die vom Förderraum von den Membranen getrennten Räume sind mittels Kanäle mit der Umgebung verbunden, so dass bei einer eventuellen Leckage das Fördermedium aus der Pumpe austreten kann und die Bewegung der Membranen nicht behindert. Nachteilig bei dieser Pumpe ist, dass die Membranen aufgrund des hohen Drucks im Förderraum und dem hinter der Membran herrschenden Umgebungsdruck einer hohen Differenzdruckbelastung ausgesetzt sind, was zu einem schnellen Verschleiß der Membranen führt.

Eine weiter entwickelte pneumatisch angetriebene Doppelmembranpumpe ist aus der WO2009/024619 bekannt. Bei dieser Pumpe wird die den Kolben antreibende Druckluft gleichzeitig in den Raum hinter der Membran geleitet. Gleichzeitig wird die Membran durch einen Teller gestützt, welcher jedoch lediglich in einem Totpunkt vollständig an der Membran unterstützend anliegt. Nachteilig bei dieser Pumpe ist, dass bei einem Defekt der Membran das Fördermedium in die Pneumatik gelangt und die Ventile und somit die gesamte Pumpe außer Funktion setzt. Die Pumpe ist anschließend, wenn überhaupt, nur mit hohem Aufwand wieder in Stand zu setzen.

Eine Doppelkammer-Membranpumpe ohne angetriebenen Kolben ist aus der DE 32 06 242 bekannt. Zu dieser Pumpe ist ein Hauptventil offenbart, bei dem ein in einem Zylinder zwischen zwei Endstellungen hin und her bewegter Kolben als Ventilsteuerelement eingesetzt wird, wobei der Kolben mit umlaufenden Nuten und axialen Bohrungen als Steuerkanäle aufweist. Nachteilig bei dieser Pumpe sind die großen Räume, die nach dem Erreichen des Totpunktes mit Druckluft befüllt werden müssen, damit die Membran in die andere Richtung bewegt werden können. Hierdurch wird sehr viel Druckluft benötigt, welches die Unterhaltskosten der Pumpe erhöht. Eine ähnlich aufgebaute Pumpe mit den gleichen Nachteilen ist aus der CA 1172904, der WO97/10902 und der US 5,368,452 bekannt. Auch bei der aus der W2009/024619 bekannten Pumpe wird unverhältnismäßig viel Druckluft für den Betrieb der Pumpe benötigt. Auch sind diese Pumpen nicht druckübersetzt, so dass der Förderdruck immer unter dem Einspeisedruck liegt.

Aus US 3,763,891 ist ein Steuerventil zum alternierenden Befüllen zweier Arbeitsräume eines Kolben-Zylinder-Systems einer Pumpe mit einem Fluid bekannt, wobei das Ventil zwei Ventilpumpenausgänge und ein Ventilsteuerelement aufweist, welches in einem Raum eines Ventilgehäuses verschieblich angeordnet und zwischen zwei Endpositionen angetrieben hin und her bewegbar ist. Wobei das Ventilsteuerelement Steuerkanäle aufweist, di mit im Ventilgehäuse angeordneten Gehäusekanälen zusammenwirken, wobei der erste Ventilpumpenausgang mit den ersten Gehäusekanälen und der zweite Ventilpumpenausgang mit den Gehäusekanälen in Verbindung ist. In einem mittleren Bereich zwischen den zwei Endstellungen sind die Ausgänge über Steuerkanäle des Ventilsteuerelementes miteinander verbunden.

Aus DE 25 03 277 A1 ist ferner ein Verfahren für die Bewegung eines mit Luft beaufschlagten Kolbens mit Kolbenstange bekannt, wobei vor jeder Umkehrbewegung des Kolbens mit der Kolbenstange die in dem jeweiligen Zylinderraum an dem Kolben anstehende Druckluft in den gegenüberliegenden drucklosen Zylinderraum geleitet wird, bis nahezu Druckausgleich oder Druckausgleich erreicht ist, wobei dann anschließend in dem Zylinderraum zur Bewegung des Kolbens bis zum Anschlag der Kolbem mit Druckluft voll beaufschlagt wird, während die dem gegenüberliegenden Zylinderraum entspannte Restluft in Freie abströmt.

Aus US 2005/0199302 A1 ist ein Ventil bekannt, bei dem ein Ventilsteuerelement von einer Stange hin und her bewegt wird, wobei an der Stange zu beiden Seiten des Ventilsteuerelementes jeweils ein Kolben mit umlaufender Dichtung angeordnet ist und die Kolben zusammen mit dem Ventilgehäuse Arbeitsräume bilden.

Aufgabe der vorliegenden Erfindung ist es, ein Ventil für eine alternierend angetriebene Pumpe bereit zu stellen, mit dem die Pumpe einen guten Wirkungsgrad aufweist.

Diese Aufgabe wird erfindungsgemäß mit einem Ventil mit den Merkmalen des Patentanspruchs 1 gelöst. Vorteilhafte Ausgestaltungen des Ventils nach Patentanspruch 1 ergeben sich durch die Merkmale der Unteransprüche.

Der Erfindung liegt der Gedanke zugrunde, dass das Ventil in einem mittleren Übergangsbereich zwischen den Endstellungen des Ventilsteuerelementes die beiden mit den Pumpenarbeitsräumen verbindbaren Ventilausgänge über das Ventilsteuerelement miteinander verbindet.

Wie einleitend bereits beschrieben, weisen derartige Pumpen in der Regel ein Kolben-Zylinder-System auf, wobei der Kolben die beiden Arbeitsräume voneinander abdichtend trennt. Je nachdem welcher Arbeitsraum mit Druckluft oder einem flüssigen Medium gefüllt wird, wird der Kolben nach links oder rechts in seine jeweiligen Endstellungen verstellt. Die Bewegungsumkehr des Kolbens erfolgt bei bekannten Ventilen dadurch, dass aus dem zuletzt befüllten Arbeitsraum das Fluid herausgelassen, d.h. entspannt, wird und in den anderen Arbeitsraum die Druckluft bzw. das flüssige und unter Druck stehende Medium über das Ventil eingeleitet wird.

Bei dem erfindungsgemäßen Ventil wird vorteilhaft die bereits vorgespannte Luft des zuletzt befüllten Arbeitsraumes nicht ungenutzt in die Umgebung abgelassen, sondern zum Vorbefüllen des als nächstes zu befüllenden Arbeitsraumes genutzt. Hierdurch wird vorteilhaft Druckluft eingespart, wodurch eine derartige Pumpe energieeffizienter betrieben werden kann.

Vorteilhaft ist das Hauptventil als 4/2-Wegeventil bzw. als 5/2-Wegeventil ausgebildet. Es besitzt somit zwei Ventilausgänge zum Anschluss der Arbeitsräume der Pumpe, einen Eingang für das von einer externen Druckquelle zugeführten Fluids, sowie einen oder zwei Ausgänge, welcher bzw. welche zum alternierenden Ablassen des in den Arbeitsräumen der Pumpe unter Druck stehenden Fluids dient bzw. dienen.

Da sich das Ventilsteuerelement des Ventils nur zwischen seinen beiden Endstellungen alternierend hin und her und nur in diesen jeweils verharrt, wird für die vorliegende Erfindung definiert, dass es ein Ventil mit zwei Schaltpositionen ist. Das Verbinden der beiden Ventilpumpenausgänge erfolgt während des Durchfahrens des mittleren Bereichs zwischen den beiden Endstellungen. Hier befindet sich das Ventilsteuerelement nicht in einer definierten Schaltposition. Sollte dagegen der mittlere Bereich ebenfalls als Schaltstellung verstanden werden, so wäre das erfindungsgemäße Ventil vorteilhaft ein 5/3- oder 4/3-Wegeventil.

Sofern z.B. die Pumpe eine pneumatisch angetriebene Pumpe ist, werden somit während der Bewegungungsphase des Ventilsteuerelementes und des Durchfahrens des mittleren Bereiches zwischen den Endstellungen die beiden Arbeitsräume des Kolben-Zylinder-Systems der angeschlossenen Pumpe miteinander über das Ventilsteuerelement verbunden und somit der übernehmende Arbeitsraum mit der komprimierten Druckluft aus dem übergebenden Arbeitsraum vorgefüllt. Beim weiteren Verfahren in die nächste Endstellung des Ventilsteuerelementes wird der Kurzschluss der Pumpenausgänge des Ventils aufgehoben und der Arbeitsraum, der vorgefüllt wurde, mit dem Druckluft weiter befüllt. Der andere Arbeitsraum wird über das Ventilstellglied mit dem Ventilausgang verbunden, so dass sich die restliche Arbeitsluft aus dem Arbeitsraum z.B. über Schalldämpfer entspannen kann. Hierdurch wird ein besserer Wirkungsgrad für die angeschlossene Pumpe erzielt, da weniger Druckluft für den Betrieb der Pumpe benötigt wird.

Vorteilhaft kann das Ventilsteuerelement von einer in die andere Endstellung bewegt mittels ungeregeltem Fluiddruck betrieben werden. Dagegen ist es meist notwendig, eine geregelte Fluiddruckquelle zum Befüllen der Arbeitsräume der Pumpe zu verwenden. Das erfindungsgemäße Ventil kann hierzu einen Eingang z.B. für ungeregelte Druckluft einer externen Druckluftquelle aufweisen, wobei das Ventil selbst eine Druckregeleinrichtung zur Erzeugung von geregelter Druckluft eines bestimmten Druckes aufweisen kann. Ebenso kann das Ventil einen Eingang für geregelte und einen Eingang für ungeregelte Luft aufweisen.

Das Ventilsteuerelement wird vorteilhaft von einem Kolben hin und her bewegt. Das Ventilsteuerelement kann dabei ein Teil des Kolbens sein. Es ist besonders vorteilhaft, wenn das Ventilsteuerelement vom Kolben derart entkoppelt ist, dass es stets sicher mit seiner Anlagefläche abdichtend gegen eine Anlagefläche des Gehäuses gehalten, insbesondere druckbeaufschlagt ist. Dabei sind in der Anlagefläche des Ventilsteuerelements Kanalöffnungen der Steuerkanäle und in der Anlagefläche des Gehäuses Kanalöffnungen der Gehäusekanäle angeordnet sind. In den einzelnen Bewegungsphasen wirken diese Öffnungen und Kanäle entsprechend zusammen. Die Anlageflächen sind dabei aus fertigungstechnischen Gründen vorteilhaft plan auszubilden.

Zum Andrücken der Anlagefläche an die Anlagefläche des Gehäuses kann entweder mindestens ein Federelement vorgesehen sein, welches sich an dem Kolben abstützt und das Ventilsteuerelement mit seiner Anlagefläche abdichtend gegen eine Anlagefläche des Gehäuses druckbeaufschlagt. Es ist jedoch auch möglich, dass das Ventilsteuerelement mit seiner Anlagefläche mittels eines Fluids, z.B. in Form eines Kolben-Zylinder-Systems, welches im Kolben des Ventils angeordnet ist, abdichtend gegen die Anlagefläche des Gehäuses druckbeaufschlagt wird.

Das Ventilsteuerelement kann vorteilhaft in einer Ausnehmung des Kolbens einliegen, wobei insbesondere zumindest in Bewegungsrichtung des Kolbens zwischen dem Kolben und dem Ventilsteuerelement ein Formschluss besteht, so dass das Ventilsteuerelement zumindest in Bewegungsrichtung des Kolbens zu diesem relativ nicht verschieblich ist.

Der Raum der Ausnehmung ist dabei mittels jeweils mindestens einer Dichtung gegenüber den Arbeitsräumen des Ventils, welche durch den Kolben in Zusammenspiel mit dem Zylinder gebildet sind, abgedichtet ist.

Das Ventilsteuerelement selbst kann vorteilhaft in einer einfachen Ausgestaltung eine Quaderform aufweisen, wobei eine Seite die Anlagefläche bildet.

In einer bevorzugten Ausführungsform weist das Ventilsteuerelement mindestens eine, insbesondere zwei, sich in Bewegungsrichtung des Ventilsteuerelementes erstreckende Ausnehmung in der Anlagefläche aufweist, die mit den Öffnungen des Gehäuses derart zusammenwirkt, das wahlweise ein Ventilpumpenausgang, an den die Verbindungsleitung zu einem Arbeitsraum A oder B der Pumpe angeschlossen ist, mit dem Ventilausgang verbunden ist, so dass sich das noch im Arbeitsraum befindliche Fluid in einen Fluidspeicher oder in die Umgebungsluft entspannen und abfließen bzw. strömen kann. Während der Bewegungsphase, in der das Ventil die beiden Arbeitsräume der Pumpe miteinander verbindet, ist der Pumpenausgang bzw. Pumpenauslasskanal über das Ventilsteuerelement mit keinem der Ventilpumpenausgänge verbunden. Zum Verbinden der beiden Pumpenventilausgänge während der mittleren Bewegungsphase weist das Ventilsteuerelement einen weiteren Kanal auf, der durch Wandungen des Ventilsteuerelementes von den Ausnehmungen getrennt ist. Vorteilhaft kann dieser Kanal zwischen zwei zueinander beabstandeten Ausnehmungen verlaufen.

Die Kanalöffnungen in der durch das Gehäuse gebildeten Anlagefläche sind vorteilhaft derart angeordnet, dass eine oder zwei voneinander beabstandeten Öffnungen für den Ventilausgangskanal in der Mitte zwischen den Öffnungen der Kanäle, welche zu den Ventilpumpenausgängen führen, angeordnet ist bzw. sind. Der Abstand der beiden Öffnungen für die beiden Kanäle, welche zu den Ventilpumpenausgängen führen, sind größer zu wählen als die Länge der Ausnehmungen in der Anlagefläche des Ventilsteuerelements, so dass sichergestellt ist, dass dem mittleren Bereich durch die Ausnehmung für eine bestimmte Wegstrecke der Ventilausgang nicht mit einer Öffnung der Kanäle, welche zu den Ventilpumpenausgängen führen, korrespondiert bzw. überlappt. Ferner enden in dem Raum, in dem das Ventilsteuerelement angeordnet ist, jeweils Kanäle, die zur Einspeisung des unter Druck stehenden Fluids, insbesondere Druckluft, in die Arbeitsräume der Pumpe dienen. Diese Kanäle sind mit dem Pumpeneingang in Verbindung. Dabei ist darauf zu achten, dass ein Freigeben der Öffnung des Verbindungskanals zu einem Ventilpumpenausgang erst dann erfolgen darf, wenn die mittlere Bewegungsphase abgeschlossen ist, d.h. die beiden Pumpenarbeitsräume nicht mehr miteinander in Verbindung sind. Gleichzeit erfolgt das Verbinden des zu entleerenden Arbeitsraumes der Pumpe über die Ausnehmung(en) des Ventilsteuerelementes hin zum Auslasskanal des Ventils.

Der Ventileingang ist dabei über Verbindungskanäle mit beiden stirnseitigen Bereichen des Raums, in dem das Ventilsteuerelement bewegt wird verbunden. Dabei können die Einlassöffnungen dieser Verbindungskanäle an beiden stirnseitigen Bereichen der den Raum für das Ventilsteuerelement im Kolben bildenden Ausnehmung angeordnet sein. Die stirnseitigen Wandungen der Ausnehmung im Kolben können dabei Rücksprünge aufweisen, die Kanäle bilden, welche mit den Verbindungskanäle des Ventileingangs in Verbindung sind.

Vorteilhaft wird das erfindungsgemäße Ventil mittels zusätzlicher Umschaltventile, welche durch den anzutreibenden Kolben der Pumpe betätigt bzw. geschaltet werden, gesteuert. So wird über die Umschaltventile jeweils so lange ein Arbeitsraum des Kolben-Zylinder-Systems des erfindungsgemäßen Ventils mit einem druckbeaufschlagtem Fluid, insbesondere Druckluft, gefüllt, bis das Ventilsteuerelement vollständig in seine andere Endstellung gelangt ist, so dass der Kolben der Pumpe aus seiner Endstellung in Richtung seiner anderen Endstellung herausbewegt wird. Solange keines der Umschaltventile betätigt ist, wird das Ventilsteuerelement nicht mehr angetrieben. Das Ventilsteuerelement wird jedoch in seiner Endstellung durch das in den jeweils mit druckbeaufschlagtem Fluid zu füllenden Arbeitsraum einfließende Fluid gehalten, da dieses gegen die Stirnwandung des Ventilsteuerelementes in Richtung der einzuhaltenden Endstellung kraftbeaufschlagt. Zudem wird es durch die Reibung der Dichtungen in den Endstellungen gehalten.

Die Umschaltventile können vorteilhaft Drosseln aufweisen, so dass die aus dem jeweiligen Arbeitsraum herausgedrückte Luft durch die jeweilige Drossel gebremst wird und es hierdurch vorteilhaft zu einer verlangsamten Bewegung des Ventilsteuerelementes des Ventils kommt, wodurch die Phase des Druckausgleichs zwischen dem vorgespannten und dem demnächst zu entleerenden Arbeitsraum und dem als nächstes zu befüllenden Arbeitsraum möglichst lang wird. Die Drossel wirkt am Anfang der Bewegung des Pneumatikkolbens noch nicht so stark, so dass das Ventilsteuerelement des Hauptventils mit hoher Geschwindigkeit aus seiner Endstellung in Richtung des mittleren Bereiches, in dem die Arbeitsräume des Pneumatikzylinders kurzgeschlossen sind, verstellt wird.

Nachfolgend wird anhand von Zeichnungen das erfindungsgemäße Ventil und sein Einsatz an einer Doppelmembranpumpe näher beschrieben.

Es zeigen:
- Fig. 1:: Frontansicht auf das erfindungsgemäße Ventil mit daran angeordneten Schalldämpfern;
- Fig. 2:: Schnitt durch die Ebene A-A gem. Figur 1;
- Fig. 3:: Seitenansicht des Ventils gem. Figuren 1 und 2 mit daran angeordneten Schalldämpfern;
- Fig. 4:: Schnitt durch die Ebene B-B gem. Figur 3;
- Fig. 5:: Seitenansicht des Ventils gem. Figuren 1 bis 4 ohne die Schalldämpfer zur Darstellung der Schnittebenen C-C und D-D;
- Fig. 6:: Ventilsteuerelement in verschiedenen Ansichten und Schnitten;
- Fig. 7a-c:: Schnitt durch die Ebene C-C gem. Figur 5 wobei das Steuerungselement jeweils in seinen beiden Endstellungen sowie im mittleren Bereich, bei dem die Ventilpumpenausgänge miteinander über das Ventilsteuerelement verbunden sind;
- Fig. 8a-c:: Schnitt durch die Ebene D-D gem. Figur 5 wobei das Steuerungselement jeweils in seinen beiden Endstellungen sowie im mittleren Bereich, bei dem die Ventilpumpenausgänge miteinander über das Ventilsteuerelement verbunden sind;
- Fig. 9a-c:: horizontaler Schnitt durch das Ventil im Bereich des Ventilsteuerelementes;
- Fig. 10:: Perspektivische Ansicht der erfindungsgemäßen Membranpumpe in Form einer Doppelmembranpumpe;
- Fig. 11:: geschnittene Darstellung der Membranpumpe gemäß Fig. 10;
- Fig. 12:: Querschnittsdarstellung durch die Doppelmembranpumpe gemäß der Figuren 10 und 11;
- Fig. 13:: Pneumatikplan für eine erfindungsgemäße Membranpumpe mit einem 5/2-Wegeventil als Hauptventil;
- Fig. 14:: Pneumatikplan für eine erfindungsgemäße Membranpumpe mit 4/2-Wegeventil als Hauptventil.

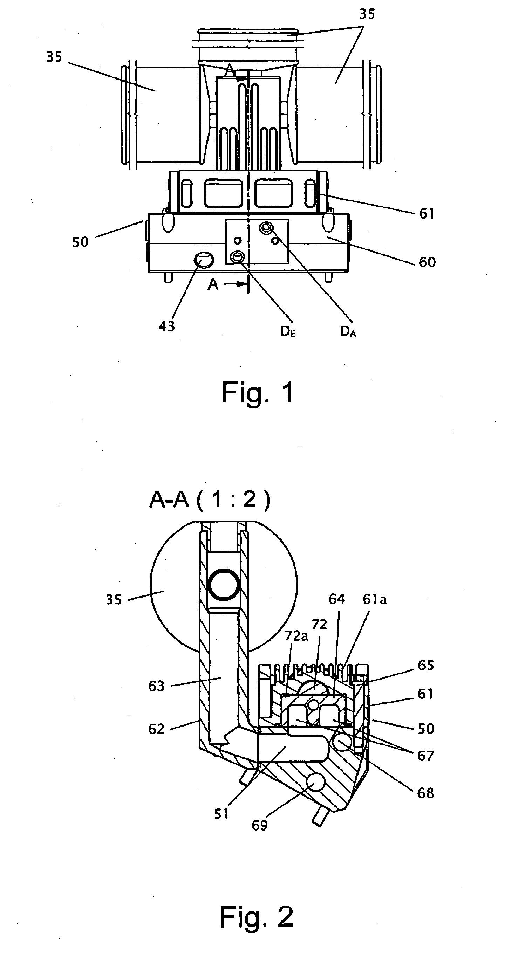

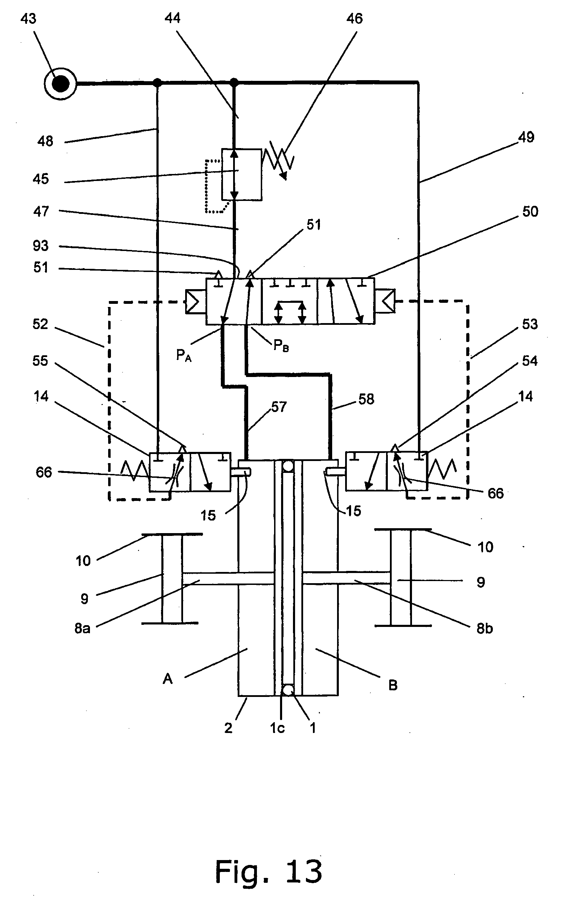

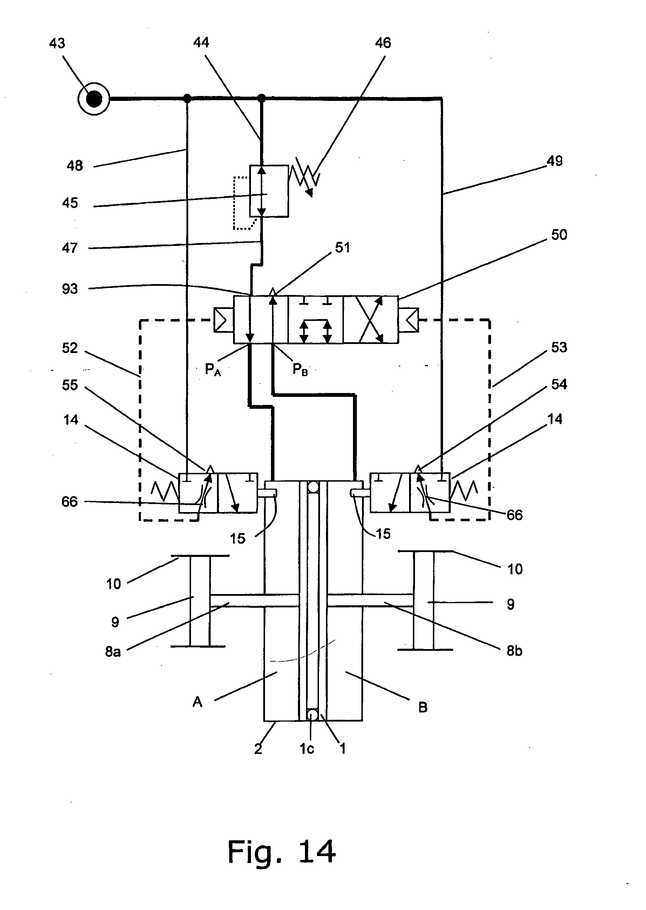

Die Figur 1 zeigt eine Frontansicht auf das erfindungsgemäße Ventil 50 mit daran angeordneten Schalldämpfern 35. Das Ventil 50 weist ein unteres Gehäuseteil 60 und ein oberes Gehäuseteil 61 auf. Im unteren Gehäuseteil 60 ist ein Anschluss 43 vorgesehen, an dem eine Druckleitung zur Verbindung mit einer externen, nicht dargestellten Druckerzeugungseinrichtung, anschließbar ist. Das Ventil 50 weist zudem Anschlüsse D_{E}, D_{A} auf, an die eine Druckregeleinrichtung 45, siehe Figur 13 und 14, mit ihren Ein- und Ausgängen anschließbar ist. Sofern Druckluft einer externen Druckluftquelle an den Pumpeneingang 43 angeschlossen wird, steht hierdurch innerhalb des Gehäuses 60, 61 des Ventils 50 sowohl ungeregelte als auch geregelte Luft eines bestimmten konstanten Drucks zur Verfügung.

Die Figur 2 zeigt den Schnitt durch die Ebene A-A des Ventils 50 gem. Figur 1. In dem unteren Gehäuseteil 60 sind in der Zeichnungsebene hinein verlaufende Kanäle 68 und 69 angeordnet. Zusätzlich ist der Auslasskanal 51 vorgesehen, der über Öffnungen in der Anlagefläche des Gehäuseteils 60 mit den Ausnehmungen 67 im Ventilsteuerelement 64 verbindbar ist. Der Auslasskanal 51 ist mit einem Kanal 63 eines angesetzten Gehäuseteils 62 in Verbindung, an dem die Schalldämpfer 35 zur Schallminimierung der ausströmenden und sich entspannenden Druckluft angeordnet sind. Das Ventilsteuerelement 64 liegt in einer Ausnehmung 72a des Kolbens 72 formschlüssig ein, so dass es den Bewegungen des Kolbens 72 folgt. Die Gehäuseteile 60 und 61 sind mittels der Verbindungsschrauben 65 miteinander verbunden. Zur besseren Wärmeaufnahme sind auch beim oberen Gehäuseteil 61 Kühlrippen 61a vorgesehen.

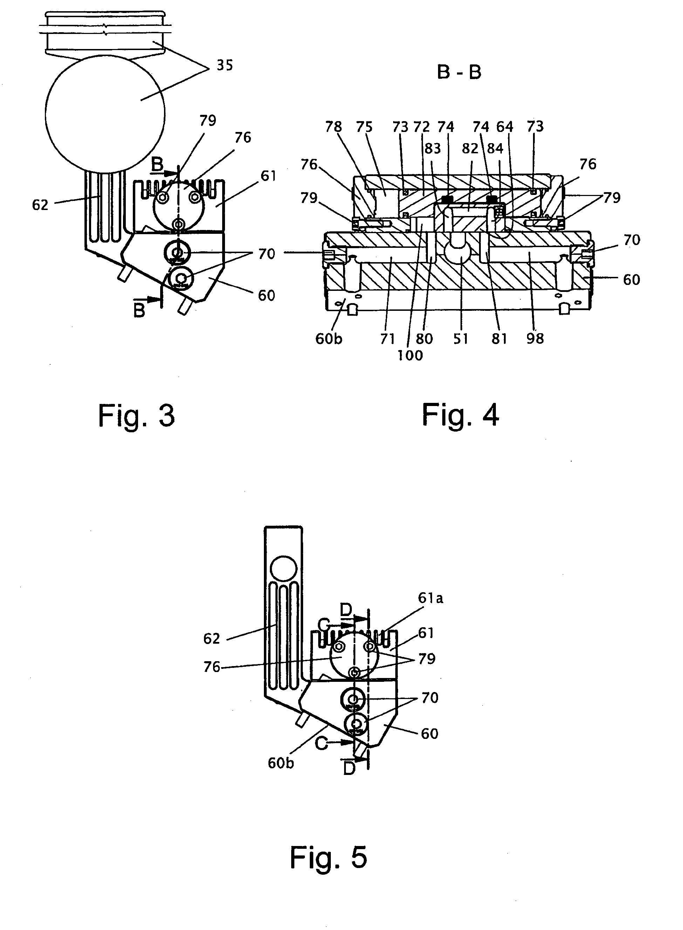

Die Figur 3 zeigt eine Seitenansicht des Ventils 50 gem. den Figuren 1 und 2 mit daran angeordneten Schalldämpfern 35. Die Stirnseiten des Kolben-Zylinder-Systems des Ventils 50 sind mittels Deckeln 76 verschlossen, wobei die Deckel 76 mittels jeweils drei Schrauben 79 am Gehäuseteil 61 befestigt sind. Die sich längs durch das untere Ventilgehäuse 60 erstreckenden und durch Bohrungen gebildeten Kanäle sind mittels Verschlussstopfen 70 verschlossen.

Die Figur 4 zeigt einen Schnitt durch die Ebene B-B des in Figur 3 dargestellten Ventils. Im unteren Gehäuseteil 60 sind die horizontal verlaufenden Kanäle 71 und 98 angeordnet, welche die Kanäle 80 und 81 jeweils mit den Ventilpumpenausgängen P_{A} und P_{B} verbinden. Die weitere Kanalausgestaltung kann letztendlich beliebig den jeweils erforderlichen Bedingungen angepasst werden. Die Kanäle 80 und 81 enden in Öffnungen 80a, 81a der Anlagefläche 60a des Gehäuseteils 60, so dass sie mit den Kanälen 83, 84 und den Ausnehmungen 67 des Ventilsteuerelementes 64 zusammenwirken können. Das obere Gehäuseteil 61 bildet zusammen mit den stirnseitigen Gehäusedeckeln 76 den Zylinder für den Kolben 72, welcher mittels Dichtungen 73 die beiden Arbeitsräume 75 und 95 voneinander abdichtend trennt. Durch die Dichtungen 73 ist ebenfalls sichergestellt, dass kein Druckmedium aus den Arbeitsräumen 75 und 95 in die Ausnehmung 72a gelangt, in der das Ventilsteuerelement 64 einliegt. Das Ventilsteuerelement 64 wird mittels der beiden Federn 74 gegen die Anlagefläche 60a des unteren Gehäuseteils 60 gedrückt, so dass bei genügender Planheit beider Anlageflächen eine hinreichende Dichtheit sichergestellt ist.

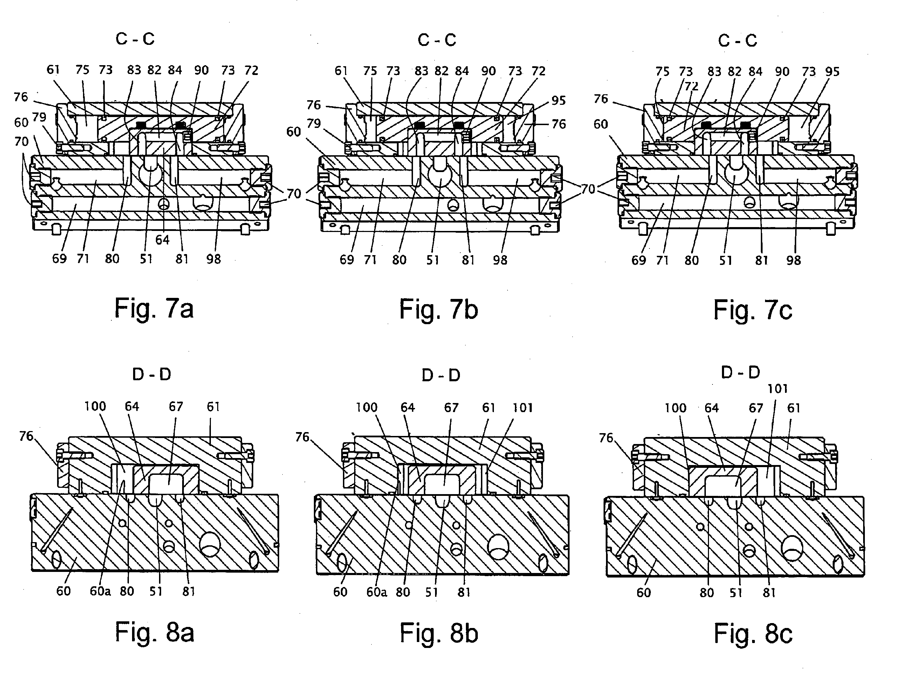

Die Figur 5 zeigt eine Seitenansicht des Ventils 50 gemäß der Figuren 1 bis 4 zur Darstellung der Schnittebenen C-C und D-D. Die zugehörigen Schnitte sind in den Figuren 7a bis 7c und in den Figuren 8a bis 8c dargestellt.

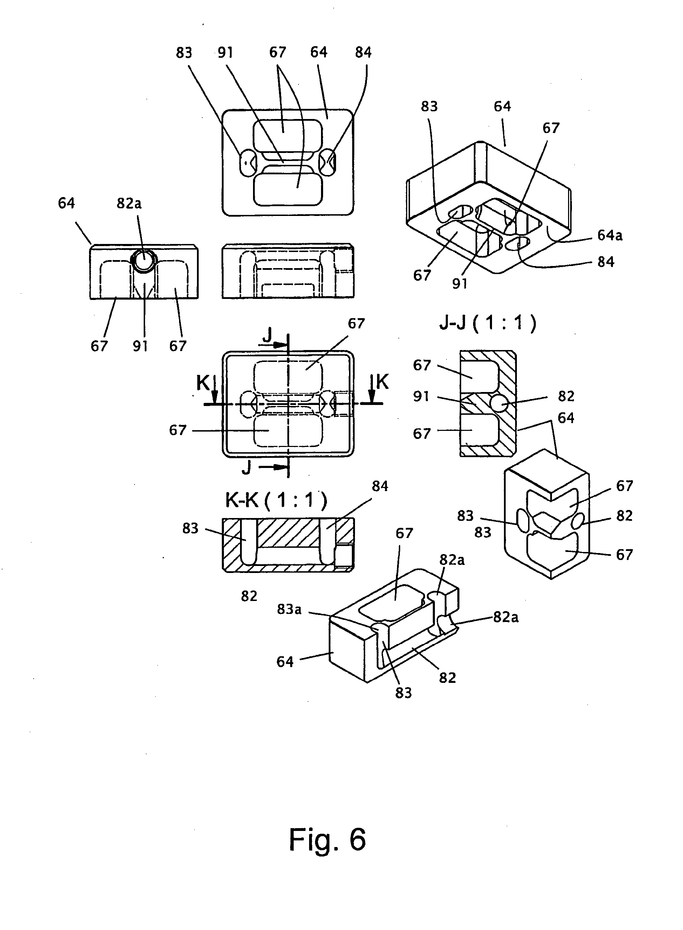

Die Fig. 6 zeigt das Ventilsteuerelement 64 in verschiedenen Ansichten und Schnitten. Das Ventilsteuerelement 64 weist eine Anlagefläche 64a auf, mit der sie zumindest bereichsweise an der Anlagefläche 60a des unteren Gehäuseteils 60 anliegt. In der Anlagefläche 64a sind die beiden durch den Steg 91 voneinander getrennten Ausnehmungen 67 angeordnet. Die Kanäle 83 und 84 erstrecken sich senkrecht von der Anlagefläche 64a hinein in das Ventilsteuerelement 64 und sind durch den Kanal 83, welcher durch eine seitliche Sacklochbohrung gebildet ist, miteinander verbunden. Die seitliche Öffnung 82a ist im zusammengebauten Zustand des Ventils 50 durch eine Verschlussschraube oder Stopfen 90 (s. Figur 7b) verschlossen. Das Ventilsteuerelement 64 ist quaderförmig, wobei die Kanten leicht abgerundet ausgebildet sind, so es sicher in der Ausnehmung 72a des Kolbens 72 verschieblich einliegt.

Die Figuren 7a bis 7c zeigen das Ventilsteuerelement 64 in drei verschiedenen Stellungen geschnitten durch die Ebene C-C gem. Figur 5. Das Ventilsteuerungselement 64 befindet sich in Figur 7a in der rechten und in Figur 7c in der linken Endstellung. Die Figur 7b zeigt die mittlere Stellung, bei dem das Ventilsteuerelement 64 über die Kanäle 82, 83 und 84 die beiden Verbindungsleitungen 71, 80 und 81, 98, welche zu den Ventilpumpenausgänge P_{A}, P_{B} führen, miteinander verbindet.

Die Figuren 8a bis 8c zeigen das Ventil 50 für die gleichen Stellungen des Ventilsteuerelementes 64 jedoch in der Schnittebene D-D. In dieser Schnittebene ist das Zusammenwirken der einen Ausnehmung 67 mit den Kanälen 80, 81 und dem Auslasskanal 51 in den verschiedenen Ventilstellungen zu erkennen. In Figur 8a ist über die Ausnehmung 67 der Kanal 81 mit dem Auslasskanal 51 verbunden. In dieser Endstellung bilden somit die Ausnehmungen 67 sowie der Kanal 82, 83, 84 eine gemeinsame Verbindung mit vergrößertem Querschnitt, so dass das aus dem Arbeitsraum A der Pumpe herausströmende und sich entspannenden Fluid mit größtmöglicher Geschwindigkeit nach draußen entweichen kann. Gleiches gilt für die andere Endstellung, wie sie in Figur 8c dargestellt ist, nur dass dort der Ventilpumpenausgang B mit dem Auslasskanal 51 verbunden ist. In der in Figur 8b dargestellten Stellung des Ventilsteuerelementes 64 ist der Auslasskanal 51 über die Ausnehmungen 67 mit keinem Kanal in Verbindung.

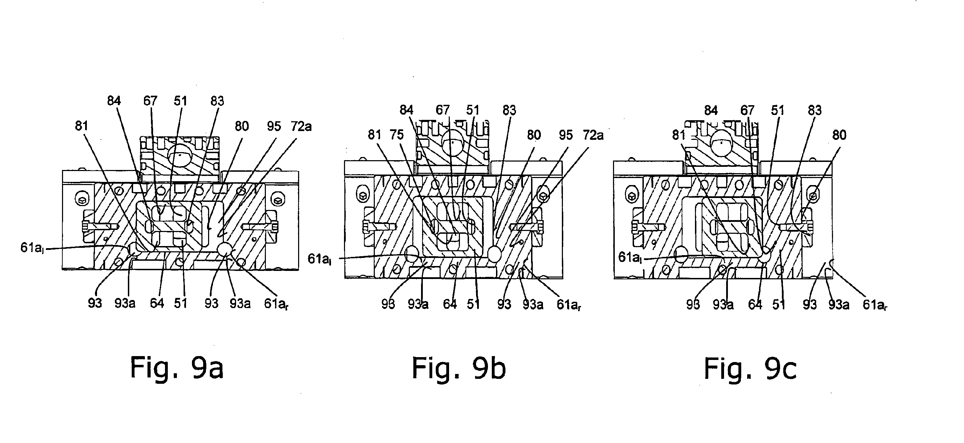

Die Figuren 9a bis 9c zeigen horizontale Schnitt durch das Ventil 50 im Bereich des Ventilsteuerelementes 64 für die drei zu den in den Figuren 7 und 8 dargestellten Stellungen. In diesen Schnittzeichnungen sind die Einlassöffnungen 93a zu erkennen, durch die das unter Druck stehende Fluid in die freien Räume 100 bzw. 101 links und rechts des Ventilsteuerelements 64 gelangt. Sobald das Ventilsteuerelement 64 die jeweilige Öffnungen der Kanäle 80 bzw. 81 freigibt, gelangt das einströmende Fluid über die Verbindungskanäle 80, 71 und 81, 98 zu den Ventilpumpenausgängen P_{A}, P_{B}. Die Kanäle 93 enden mit ihren Öffnungen 93a dabei im Bereich von Ausnehmungen 61aᵣ bzw. 61aₗ des oberen Gehäuseteils 61.

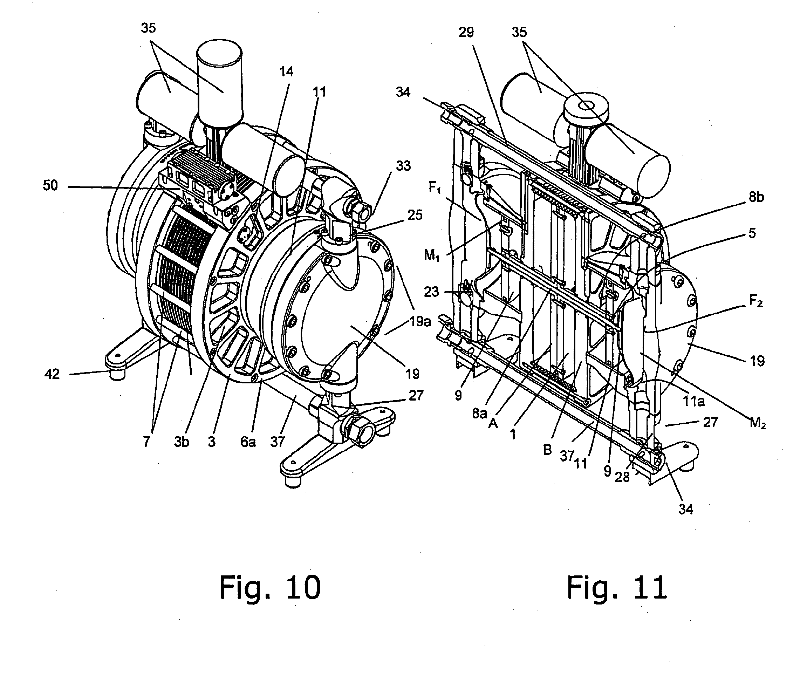

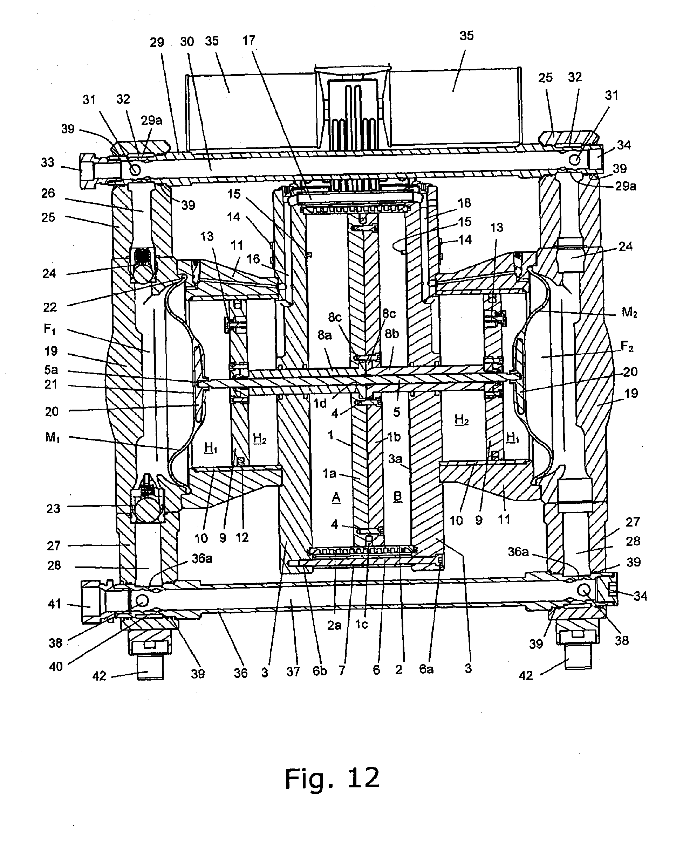

Die Figuren 10 und 11 zeigen eine perspektivische Ansicht einer Membranpumpe in Form einer Doppelmembranpumpe. Die Doppelmembranpumpe weist einen Gehäusedeckel 19 sowie ein den Zylinder 10 des hydraulisch wirkenden Kolben-Zylinder-Systems 9, 10 aufnehmendes Gehäuseteil 11 auf. Das Gehäuseteil 11 ist, wie in Figur 11 dargestellt, mittels koaxialer Schrauben 11a an der axialen Zylinderwandung 3 des ersten Kolben-Zylinder-Systems befestigt. Vom Gehäusedeckel 19 und dem Gehäuseteil 11 ist bei 22 (s. Figur 12) die Membran M eingespannt. Gehäusedeckel 19 und Gehäuseteil 11 sind mittels der Schrauben 19a miteinander verbunden und halten die Membran M in Position. Der Gehäusedeckel 19 bildet unten und oben jeweils eine Aufnahme für ein Rückschlagventil 24. Die Rückschlagventile 23, 24 werden vor dem Anschrauben der Gehäuseflansche 25, 27 an den Gehäusedeckel 19 in die entsprechenden Ausnehmungen des Gehäusedeckels 19 eingesetzt. Zusätzliche Dichtungen verhindern, dass Fördermedium um das Gehäuse der Rückschlagventile 23, 24 herum dringen kann. Die axialen Wandungen 3 des ersten Kolben-Zylinder-Systems sind mittels Distanzhülsen 7 auf Abstand gehalten und mittels der Schrauben 6 miteinander verbunden. Zwischen den Wandungen 3 ist zudem druckdicht die zylindrische Wandungshülse 2, welche den Zylinder bildet, angeordnet, wobei zusätzliche Dichtungen für die Dichtheit sorgen. Die Schrauben 6 weisen einen Schraubenkopf 6a und an ihrem Ende ein Gewinde 6b auf, mit dem sie mit der einen axialen Wandung 3 verschraubt sind.

In dem Zylinder 2, 3 des ersten Kolben-Zylinder-Systems ist der erste Kolben 1 angeordnet, der durch zwei Scheiben 1a, 1b gebildet ist und die Arbeitsräume A und B voneinander trennt. Die Scheiben 1a, 1b sind mittels der Schrauben 4 miteinander verschraubt. Die zylindrische Wandung 2 weist an ihrer Außenseite Rippen zur Wärmeaufnahme aus der Umgebungsluft auf, um ein Vereisen der Membranpumpe zu verhindern. Die axialen Wandungen 3 weisen ebenfalls Ausnehmungen 3b auf, die ebenfalls der besseren Wärmeleitung sowie zur Versteifung und Materialersparnis dienen. Der Kolben 1 weist eine umlaufende Dichtung 1c auf, die abdichtend an der Innenwandung des Zylinders 2 anliegt.

Beim Zusammenbau des Kolbens 1 werden vorher durch die Bohrungen 1d die Kolbenstanden 8a, 8b geschoben, bis die Kragen 8c in den entsprechenden Ausnehmungen 1e der Kolbenscheiben 1a, 1b einliegen. Durch den Zusammenbau der Kolbenscheiben 1a, 1b sind die Kolbenstangen 8a, 8b formschlüssig an dem Kolben 1 befestigt.

Die Kolbenstangen 8a, 8b durchgreifen die Bohrungen 3a der axialen Wandungen 3, wobei Dichtungen 56 dafür sorgen, dass keine Druckluft aus den Arbeitsräumen A, B in die Hydraulikräume H₂ gelangt. Mit ihren Enden 8d sind die Kolbenstangen 8a, 8b mit den Hydraulikkolben abdichtend mittels Schrauben 60 verbunden. Die Kolbenstangen 8a, 8b sind als Rohre ausgebildet, in denen das Verbindungselement 5 in Form einer Stange verschieblich einliegt. Das Verbindungselement 5 ist mit seinen Außengewinde aufweisenden Enden 5a in den Membranteller 20 eingeschraubt. Der Membranteller 20 ist in der Membran Mᵢ in deren Mitte 21 eingeformt.

Die Hydraulikkolben 9 weisen jeweils eine umlaufende Dichtung 12 auf, die abdichtend an der Innenwandung der Zylinderwandung 10 anliegen und die beiden Arbeitsräume H₁, H₂ voneinander trennen. Die beiden Hydraulikräume H₂ der beiden hydraulischen Kolben-Zylinder-Systeme sind über die Verbindungskanäle 16, 17 und 18 miteinander verbunden. In den Hydraulikkolben 9 sind jeweils Differenzdruckventile 13 angeordnet. Sofern beim Arbeiten der Pumpe der Differenzdruck zwischen den Arbeitsräumen H₁ und H₂ einen gewissen Wert übersteigen, öffnet das Differenzdruckventil 13 und der Differenzdruck kann auf einen vorgegebenen Wert abgesenkt werden. Der Verbindungskanal 16, 17, 18 kann mittels einer weiteren, nicht dargestellten Verbindungsleitung, mit einem Vorratsbehältnis und/oder einem Sensor verbunden sein. Erfolgt nun ein Zu- oder Abfluss von Hydraulikmedium auf dem Vorratsbehälter bzw. der Verbindungsleitung, kann dies einen Bruch der Membran bedeuten, woraufhin einer übergeordneten Steuerung ein Fehlersignal gesandt werden kann und/oder die Membranpumpe automatisch angehalten wird. Dies kann z.B. durch das zwangsgesteuerte Verschließen der die Pumpe mit Druckluft versorgenden Zuleitung erfolgen.

Die Zuführkanäle 28 sind mittels der Zuführleitung 36 miteinander verbunden, wobei die Zuführleitung 36 mit ihrem einen Ende 41 den Fördermediumseingang der Pumpe bildet. Das andere Ende der als Rohr ausgebildeten Zuführleitung 36 ist mittels eines eingeschraubten Stopfens 34 verschlossen. Die Zuführleitung 36 liegt mit ihren Bereichen 36a schwimmend in den Gehäuseflanschen 27 ein, wobei Dichtungen 39 für die nötige Dichtheit sorgen. Die Gehäuseflansche 27 weisen einen die Bereiche 36a umfassenden Ringraum 40 auf, welche durch eine umlaufende Nut gebildet ist. Im Bereich 36a weist die Zuführleitung 36 fensterartige Öffnungen 38 auf, durch die das Fördermedium aus dem Innenraum 37 der Zuführleitung 36 in den Ringraum 40 und von dort in den Zuführkanal 28 gelangt.

Die Auslasskanäle 26 sind mittels der Druckleitung 29 miteinander verbunden, wobei die Druckleitung 29 mit ihrem einen Ende 33 den Fördermediumsausgang der Pumpe bildet. Das andere Ende der als Rohr ausgebildeten Druckleitung 29 ist mittels eines eingeschraubten Stopfens 34 verschlossen. Die Druckleitung 29 liegt mit ihren Bereichen 29a schwimmend in den Gehäuseflanschen 25 ein, wobei Dichtungen 39 für die nötige Dichtheit sorgen. Die Gehäuseflansche 25 weisen einen die Bereiche 29a umfassenden Ringraum 32 auf, welche durch eine umlaufende Nut gebildet ist. In den Bereichen 29a weist die Druckleitung 29 fensterartige Öffnungen 31 auf, durch die das Fördermedium von dem Ringraum 32 in den Innenraum 30 der Druckleitung 29 gelangen kann.

In den axialen Wandungen 3 sind Umschaltventile 14 angeordnet, die mit einer Verlängerung 15 ihrer Ventilsteuerglieder in die Arbeitsräume A, B hineinreichen. Sofern der Kolben 1 seinen Totpunkt erreicht, wird das jeweilige Umschaltventil betätigt, wodurch über nicht dargestellte Kanäle Druckluft zum Hauptventil 50 geleitet wird, und das Hauptventil seinerseits umschaltet.

Das erfindungsgemäße 50 ist außen am Pumpengehäuse angeordnet, so dass ein guter Wärmeaustausch mit der Umgebungsluft stattfinden kann, wodurch die Vereisungsgefahr gemindert wird.

Sofern der Membranteller 20 mittels des Hydraulikkolbens 9 so verstellt wird, dass sich der Förderraum Fₗ verkleinert, wird das im Förderraum Fₗ befindliche Fördermedium durch das Rückschlagventil 24 in den Auslasskanal 26 gefördert. Das Rückschlagventil 23 ist während dessen geschlossen. Wird anschließend in den Förderraum Fᵢ durch Zurückfahren der Membran Mᵢ vergrößert, so wird über das nunmehr geöffnete Rückschlagventil 23 aus der Zuführleitung 36 Fördermedium in den Förderraum Fᵢ angesaugt. Während der Ansaugphase ist das Rückschlagventil 24 verschlossen.

Die Figur 13 zeigt einen Pneumatikplan der Membranpumpe gemäß der Figuren 10 bis 2. Die mit Druckluft betriebene Membranpumpe hat einen Drucklufteingang 43, der vorteilhaft am erfindungsgemäßen Ventil 50 angeordnet ist. Im oder am Hauptventil 50 kann die Druckregeleinrichtung 45 angeordnet sein, welche mittels der Verbindungsleitung 44 mit dem Eingang 43 verbunden ist. Die Druckregeleinrichtung 45 kann ein Proportionalventil sein, welches einen Einstellmechanismus, z.B. in Form einer Einstellschraube, aufweisen kann, mit der eine Feder zur Druckeinstellung vorgespannt werden kann. Wird durch die externe Druckluftquelle (nicht dargestellt) ein ungeregelter Druck von 7 bar zur Verfügung gestellt, so kann durch die Druckregeleinrichtung 45 über die Verbindungsleitung dem Hauptventil 50 ein geregelte Druckluft von z.B. 5,5 bar zugeführt werden.

Der Eingang 43 ist über Verbindungsleitungen 48, 49 mit den Umschaltventilen 14 in Verbindung. Die Umschaltventile sind als 3/2-Wege-Ventile ausgebildet und werden mittels der in die Arbeitsräume A, B hineinreichenden Verlängerungen 15 ihrer Ventilsteuerglieder geschaltet. Eine Feder drückt dabei die Ventilsteuerglieder in die dargestellte Stellung, in der die Steuerleitungen 52, 53 nicht mit dem Ventileingang bzw. der Verbindungsleitung 48, 49 verbunden sind. Sobald der Kolben 1 das jeweilige Ventilsteuerglied 15 verstellt, wird das Umschaltventil 14 geschaltet und die ungeregelte Druckluft der externen Druckquelle schaltet das erfindungsgemäße Ventil 50 um.

Das Ventil 50 ist als 5/2-Wege-Ventil ausgebildet. In der dargestellten Stellung gelangt die geregelte Druckluft über die Verbindungsleitung 57 in den Arbeitsraum A. Der Kolben 1 wird somit zusammen mit den Hydraulikkolben 9 nach rechts verstellt. Durch das in den Hydraulikräumen H₁ befindliche Hydraulikmedium wird nunmehr die nicht dargestellte rechte Membran nach rechts verstellt, wodurch sich ihr zugehöriger Förderraum verkleinert. Die rechte Membran fördert somit. Zur gleichen Zeit saugt die ebenfalls in Figur 5 nicht dargestellte linke Membran Fördermedium aus der Zuführleitung in ihren Förderraum. Beim Erreichen des rechten Totpunktes wird das rechte Umschaltventil 14 über die Verlängerung 15 geschaltet, so dass das Hauptventil 50 ebenfalls geschaltet wird. Auf dem Weg nach links wird zunächst die Verbindung des Arbeitsraumes A mit der Verbindungsleitung 47 unterbrochen. Danach werden die beiden Arbeitsräume miteinander kurzgeschlossen, so dass die im Arbeitsraum B befindliche vorgespannte Druckluft in den Arbeitsraum A hinein entspannen kann. Hierfür steht eine gewisse Zeit zur Verfügung, bis letztendlich das Hauptventil 50 vollständig durchgeschaltet hat und über die Verbindungsleitung 47 geregelte Druckluft in den Arbeitsraum B geleitet wird, wodurch der Kolben 1 nunmehr nach links bewegt wird. Die übrige noch nicht entspannte Druckluft im Druckraum B entspannt sich anschließend über die Ventilausgänge 51 über die Schalldämpfer 35 in die Umgebung.

Die Figur 14 zeigt eine alternative Ausführungsform, bei der das erfindungsgemäße Ventil 50 als 4/2-Wegeventil ausgebildet ist. Das Ventil 50 unterscheidet sich von dem in Figur 13 dargestellten Ventil lediglich dadurch, dass nur ein Ausgang 51 vorgesehen ist.

### Bezugszeichenliste:

- A, B: Arbeitsraum des ersten Kolben-Zylinder-Systems
- M₁, M₂: Membran
- 1: Erster Kolben des ersten Kolben-Zylinder-Systems
- 1a, 1b: Kolbenscheiben
- 1c: Dichtung
- 1d: Bohrung
- 1e: Ausnehmung für Kragen 8c
- 2: Zylinder des ersten Kolben-Zylinder-Systems
- 2a: Äußere Kühlrippen des Zylinders 2
- 3: axiale Zylinderwandung des ersten Kolben-Zylinder-Systems
- 4: Schrauben
- 5: Verbindungselement
- 5a: Gewinde des Verbindungselementes 5
- 6: Verbindungsschraube
- 7: Abstandshülse
- 8a, 8b: Kolbenstange
- 8c: Kragen
- 9: Hydraulikkolben
- 10: Zylinder des hydraulisch wirkenden Kolben-Zylinder-Systems
- 11: Gehäuseteil
- 12: Dichtung
- 13: Differenzdruckventil (P_{H1}>P_{H2})
- 14: Umschaltventil
- 15: Ventilsteuerglied
- 16, 17, 18: Kanal/Verbindungsleitung
- 19: Gehäusedeckel
- 20: Membranteller
- 21: Membranbereich, in dem der Membranteller 20 angeordnet, ist
- 22: Einspannbereich der Membran Mₗ
- 23: Rückschlagventil im Zuführkanal (nur in linker Kammer darge- stellt)
- 24: Rückschlagventil im Auslasskanal (nur in linker Kammer darge- stellt)
- 25: Gehäuseflansch mit Auslasskanal 26 (Auslassgehäuse)
- 26: Auslasskanal
- 27: Gehäuseflansch mit Zuführkanal 28 (Einlassgehäuse)
- 28: Zuführkanal
- 29: Druckleitung
- 30: Innenraum der Druckleitung 29
- 31: Durchlassöffnung in Wandung der Druckleitung 29
- 32: Ringraum, der die Druckleitung 29 umfasst
- 33: Pumpenausgang für Fördermedium
- 34: Stopfen mit Einschraubgewinde
- 35: Schalldämpfer für Ausströmen der sich entspannenden Druckluft
- 36: Zuführleitung
- 37: Innenraum der Zuführleitung 36
- 38: Durchlassöffnung in Wandung der Zuführleitung 36
- 39: Dichtringe
- 40: Ringraum, der die Zuführleitung 36 umfasst
- 41: Pumpeneingang für Fördermedium
- 42: Fuß
- 43: Eingang für ungeregelte Druckluft einer externen Druckluftquelle
- 44: Verbindungsleitung
- 45: Druckregeleinrichtung in Form eines Proportionalventils
- 46: Einstellmechanismus für geregelten Ausgangsdruck der Druckregeleinrichtung 46
- 47: Verbindungsleitung, führt geregelte Druckluft zum Hauptventil 50
- 48, 49: Verbindungsleitung für ungeregelte Druckluft
- 50: Hauptventil
- 51: Ausgänge des Hauptventils, die mit den Schalldämpfern 35 in Verbindung sind
- 52, 53: Steuerleitung vom Umschaltventil 14 zum Hauptventil 50
- 54, 55: Ausgang nach Außen
- 56: Dichtung
- 57: Verbindungsleitung zum Arbeitsraum A
- 58: Verbindungsleitung zum Arbeitsraum B
- 59:
- 60: unteres Ventilgehäuseteil
- 60a: gehäuseseitige Anlagefläche für Ventilsteuerelement 64
- 61: oberes Ventilgehäuseteil
- 61aₗ, 61aᵣ: Ausnehmungen des oberen Gehäuseteils 61
- 62: die Schalldämpfer 35 tragendes Gehäuseteil mit innerem Kanal 63
- 63: innerer Kanal
- 64: Ventilsteuerelement
- 64a: Anlagefläche des Ventilsteuerelements 64
- 65: Verbindungsschraube
- 66: Drossel
- 67: Ausnehmung in der Anlagefläche 64a des Ventilsteuerelementes 64
- 68: Kanal
- 69: Kanal
- 70: Verschlussstopfen
- 71: Verbindungskanal zum Ventilpumpenausgang A
- 72: Kolben
- 72a: Ausnehmung im Kolben für Ventilsteuerelement 64
- 73: Dichtring
- 74: Federelement
- 75: linker Arbeitsraum
- 76: stirnseitiger Gehäusedeckel
- 78: Dichtung
- 79: Befestigungsschrauben
- 80: Verbindungskanal
- 80a: Kanalöffnung des Verbindungskanals 80 in der Anlagefläche des Gehäuses
- 81: Verbindungskanal
- 81a: Kanalöffnung des Verbindungskanals 80 in der Anlagefläche des Gehäuses
- 82, 83, 84: Verbindungskanal im Ventilsteuerelement 64 zum Verbinden der Ventilpumpenausgänge P_{A} und P_{B}
- 90: Verschlussschraube für Bohrung, welche den Kanal 83 bildet
- 93: Verbindungskanal zum Ventileingang
- 93a: Öffnung des Verbindungskanals 93 in der Anlagefläche 60a
- 95: rechter Arbeitsraum
- 98: Verbindungskanal zum Ventilpumpenausgang B
- 100, 101: freier Raum, links und rechts des Ventilsteuerelements 64 über den Fluid zu den jeweiligen Verbindungskanäle zu den Ventilpumpenausgängen PA, PB strömt

## Patentansprüche

1. Ventil zum alternierenden Befüllen zweier Arbeitsräume (A, B) eines Kolben-Zylinder-Systems (1, 2, 3) einer Pumpe mit einem Fluid, wobei das Ventil zwei Ventilpumpenausgänge (P_{A}, P_{B}) zur Verbindung mit den Arbeitsräumen (A, B) der Pumpe und ein Ventilsteuerelement (64) aufweist, welches in einem Raum eines Ventilgehäuses (60, 61, 76, 77) verschieblich angeordnet und zwischen zwei Endpositionen von einem Fluid angetrieben hin und her bewegbar ist, wobei das Ventilsteuerelement (64) Steuerkanäle (67, 82, 83, 84) aufweist, die mit im Ventilgehäuse (60) angeordneten Gehäusekanälen (51, 71, 98, 80, 81) zusammenwirken, wobei der erste Ventilpumpenausgang (P_{A}) mit ersten Gehäusekanälen (71, 80) und der zweite Ventilpumpenausgang (P_{B}) mit weiteren Gehäusekanälen (98, 81) in Verbindung ist, und dass in einem mittleren Bereich zwischen den zwei Endstellungen die Ventilpumpenausgänge (P_{A}, P_{B}) über Steuerkanäle (82, 83, 84) des Ventilsteuerelementes (64) miteinander in Verbindung sind, **dadurch gekennzeichnet, dass** ein den Raum in zwei voneinander abgedichtete Arbeitsräume (75, 95) unterteilender Kolben (72) das Ventilsteuerelement (64) bewegt, und dass das Ventilsteuerelement (64) in einer Ausnehmung (72a) des Kolbens (72) einliegt, wobei insbesondere zumindest in Bewegungsrichtung des Kolbens (72) zwischen dem Kolben (72) und dem Ventilsteuerelement (64) ein Formschluss besteht.

2. Ventil nach Anspruch 1, **dadurch gekennzeichnet , dass** das Ventilsteuerelement (64) mit seiner Anlagefläche (64a) abdichtend gegen eine Anlagefläche (60a) des Gehäuses (60) druckbeaufschlagt ist, wobei in der Anlagefläche (64a) des Ventilsteuerelements (64) Kanalöffnungen (67a, 83a, 84a) der Steuerkanäle (67, 83, 84) und in der Anlagefläche (60a) des Gehäuses (60) Kanalöffnungen der Gehäusekanäle (51, 80, 81) angeordnet sind.

3. Ventil nach Anspruch 2, **dadurch gekennzeichnet, dass** mindestens ein Federelement (74) sich an dem Kolben (72) abstützt und das Ventilsteuerelement (64) mit seiner Anlagefläche (64a) abdichtend gegen eine Anlagefläche (60a) des Gehäuses (60) druckbeaufschlagt oder ein Fluid das Ventilsteuerelement (64) mit seiner Anlagefläche (64a) abdichtend gegen eine Anlagefläche (60a) des Gehäuses (60) druckbeaufschlagt.

4. Ventil nach Anspruch 1, **dadurch gekennzeichnet, dass** der Raum der Ausnehmung (72a) mittels jeweils mindestens einer Dichtung (73) gegenüber den Arbeitsräumen (75, 95) abgedichtet ist.

5. Ventil nach einem der Ansprüche 1 bis 4, **dadurch gekennzeichnet, dass** die Anlageflächen (60a, 64a) plan ausgebildet sind.

6. Ventil nach einem der Ansprüche 1 bis 5, **dadurch gekennzeichnet, dass** das Ventil als 5/2-Wegeventil oder 4/2-Wegeventil ausgebildet ist, wobei das Gehäuse (60) im Raum (72a) eine Kanalöffnung (51a) eines Auslasskanals (51), eine Kanalöffnung (80a) des Verbindungskanals (80) zu dem Ventilanschluss (P_{A}), eine Kanalöffnung (81a) eines Verbindungskanals (81) zu einem Ventilanschluss (P_{B}) sowie zwei Kanalöffnungen (93a) eines Verbindungskanals (93, 47) zu einem Ventileingang (43, E2) aufweist.

7. Ventil nach Anspruch 6, **dadurch gekennzeichnet, dass** das Ventilsteuerelement (64) mindestens eine, insbesondere zwei, sich in Bewegungsrichtung des Ventilsteuerelementes (64) erstreckende Ausnehmung (67) in der Anlagefläche (64a) aufweist, die mit den Öffnungen (51, 80a, 81a) des Gehäuses (60) derart zusammenwirkt, und dass zusätzliche ein Verbindungskanal (82, 83, 84) im Ventilsteuerelement (64) angeordnet ist, der in einem mittleren Bereich, in dem sich das Ventilsteuerelement (64) zwischen den Endstellungen befindet, die Verbindungskanäle (80, 81) miteinander verbindet, wobei in diesem mittleren Bereich der Auslasskanal (51) nicht über die mindestens eine Ausnehmung (67) mit einem der Verbindungskanäle (80, 81) verbunden ist.

8. Ventil nach Anspruch 7, **dadurch gekennzeichnet, dass** in den Bewegungsphasen, welche zwischen den Endstellungen und dem mittleren Bereich liegen, jeweils einer der beiden Verbindungskanäle (80, 81) über die Ausnehmung(en) (67) mit dem Auslasskanal (51) in Verbindung ist, wobei gleichzeitig der andere Verbindungskanal (81, 80) durch den vom Ventilsteuerelement (64) freigegebenen Raum (72aₗ, 72aᵣ) mit dem Verbindungskanal (93) in Verbindung ist.

9. Ventil nach Anspruch 8, **dadurch gekennzeichnet, dass** der Verbindungskanal (93) an beiden stirnseitigen Bereichen der Ausnehmung (72a) eine Einlassöffnung (93a) aufweist, insbe-sondere mit zumindest bereichsweise stirnseitigen Ausnehmungen (72kₗ, 72kᵣ) des Kolbens (72) in Verbindung ist.

10. Ventil nach einem der vorhergehenden Ansprüche, **dadurch gekennzeichnet, dass** im oder am Ventil eine Druckregeleinrichtung (45), insbesondere in Form eines Proportionalventils, angeordnet ist, und dass das Ventil einen Ventileingang (43) für ein Fluid, insbesondere Druckluft, aufweist, welches der Druckregeleinrichtung (45) über einen Kanal (44) zugeführt wird, wobei der Ausgang der Druckregeleinrichtung (45) über eine Verbindungsleitung (47) mit dem Verbindungskanal (93) in Verbindung ist.

11. Ventil nach Anspruch 10, **dadurch gekennzeichnet, dass** im Gehäuse (60) des Ventils mindestens ein Verbindungskanal angeordnet ist, der den Ventileingang (43) mit dem Eingang der Druckregeleinrichtung verbindet, wobei der Ausgang der Druckregeleinrichtung mit dem Verbindungskanal (93) in Verbindung ist.

12. Ventil nach einem der vorhergehenden Ansprüche, **dadurch gekennzeichnet, dass** das den Kolben (72) verstellende Fluid einen höheren Druck aufweist, als das Fluid, welches über die Kanalöffnungen (93a) in den Raum (72a) gelangt.

13. Ventil nach einem der vorhergehenden Ansprüche, **dadurch gekennzeichnet, dass** ausschließlich ein Fluid das Ventilsteuerelement (64) oder den Kolben (72) kraftbeaufschlagt und antreibt, derart, dass das Ventilsteuerelement (64) oder der Kolben (72) sich alternierend zwischen seinen Endstellungen hin und her bewegt.

14. Ventil nach einem der vorhergehenden Ansprüche, **dadurch gekennzeichnet, dass** das Ventil ein 4/2-Wegventil oder ein 5/2-Wegeventil ist, wobei in den Endstellungen und in einem mittleren Bereich über das Ventilsteuerelement (64) die beiden VentilPumpenausgänge (P_{A}, P_{B}) mit einander in Verbindung sind.

15. Ventilanordnung mit einem Ventil nach einem der vorhergehenden Ansprüchen zum alternierenden Befüllen zweier Arbeitsräume (A, B) eines Kolben-Zylinder-Systems (1, 2, 3) einer Pumpe mit einem Fluid, **dadurch gekennzeichnet, dass** das Ventil (50) mittels von der Pumpe betätigter Umschaltventile (14), insbesondere in Form von 3/2-Wegeventilen, geschaltet wird.

16. Ventilanordnung nach Anspruch 15, **dadurch gekennzeichnet, dass** mittels Drosseln (66), welche insbesondere in den Umschaltventilen (14) angeordnet sind, die Bewegung des Ventilsteuerelementes (64) zumindest während der mittleren Bewegungsphase abgebremst bzw. verlangsamt wird.

## Claims

1. Valve for alternately filling two working chambers (A, B) of a piston-cylinder system (1, 2, 3) of a pump with a fluid, the valve having two valve pump outlets (P_{A}, P_{B}) for connection with the working chambers (A, B) of the pump and a valve control element (64) which is slidably arranged in a chamber of a valve housing (60, 61, 76, 77) and can be moved backwards and forwards between two end positions, driven by a fluid, the valve control element (64) having control channels (67, 82, 83, 84) which cooperate with housing channels (51, 71, 98, 80, 81) arranged in the valve housing (60), the first valve pump outlet (P_{A}) being connected to first housing channels (71, 80) and the second valve pump outlet (P_{B}) being connected to further housing channels (98, 81) and the valve pump outlets (P_{A}, P_{B}) being interconnected by control channels (82, 83, 84) of the valve control element (64) in a middle region between the two end positions, **characterised in that** a piston (72) dividing the chamber into two working chambers (75, 95) which are sealed off from one another moves the valve control element (64), and **in that** the valve control element (64) is located in a recess (72a) in the piston (72), there being a positive locking between the piston (72) and the valve control element (64), particularly at least in the direction of movement of the piston (72).

2. Valve according to claim 1, **characterised in that** the valve control element (64) is pressurised with its contact surface (64a) in a sealing manner against a contact surface (60a) of the housing (60), openings (67a, 83a, 84a) of the control channels (67, 83, 84) being arranged in the contact surface (64a) of the valve control element (64) and openings of the housing channels (51, 80, 81) being arranged in the contact surface (60a) of the housing (60).

3. Valve according to claim 2, **characterised in that** at least one spring element (74) is supported against the piston (72) and pressurises the valve control element (64) with its contact surface (64a) in a sealing manner against a contact surface (60a) of the housing (60), or a fluid pressurises the valve control element (64) with its contact surface (64a) in a sealing manner against a contact surface (60a) of the housing (60).

4. Valve according to claim 1, **characterised in that** the chamber of the recess (72a) is sealed off from the working chambers (75, 95) by in each case at least one seal (73).

5. Valve according to any one of claims 1 to 4, **characterised in that** the contact surfaces (60a, 64a) are configured to be planar.

6. Valve according to any one of claims 1 to 5, **characterised in that** the valve is configured as a 5/2 way valve or as a 4/2 way valve, the housing (60) having in the chamber (72a) a channel opening (51 a) of an outlet channel (51), a channel opening (80a) of the connecting channel (80) to the valve connection (P_{A}), a channel opening (81 a) of a connecting channel (81) to a valve connection (P_{B}) as well as two channel openings (93a) of a connecting channel (93, 47) to a valve inlet (43, E2).

7. Valve according to claim 6, **characterised in that** the valve control element (64) has in the contact surface (64a) at least one, in particular two recess(es) (67) extending in the direction of movement of the valve control element (64), which recess(es) cooperate with the openings (51, 80a, 81a) of the housing (60) such that, and that also arranged in the valve control element (64) is a connecting channel (82, 83, 84) which interconnects the connecting channels (80, 81) in a middle region in which the valve control element (64) is located between the end positions, and in this middle region, the outlet channel (51) is not connected to one of the connecting channels (80, 81) by the at least one recess (67).

8. Valve according to claim 7, **characterised in that** in the movement phases which are between the end positions and the middle region, in each case one of the two connecting channels (80, 81) is connected to the outlet channel (51) by the recess(es) (67) and, at the same time, the other connecting channel (81, 80) is connected to the connecting channel (93) by the chamber (72aₗ, 72aᵣ) cleared by the valve control element (64).

9. Valve according to claim 8, **characterised in that** the connecting channel (93) has on both end-face regions of the recess (72a) an inlet opening (93a), in particular is connected to at least region-wise end-face recesses (72kₗ, 72kᵣ) of the piston (72)..

10. Valve according to any one of the preceding claims, **characterised in that** arranged in or on the valve is a pressure regulating means (45), particularly in the form of a proportional valve, and **in that** the valve has an inlet (43) for a fluid, particularly compressed air, which fluid is supplied to the pressure regulating means (45) via a channel (44), the outlet of the pressure regulating means (45) being connected to the connecting channel (93) by a connection line (47).

11. Valve according to claim 10, **characterised in that** arranged in the housing (60) of the valve is at least one connecting channel which connects the valve inlet (43) to the inlet of the pressure regulating means, the outlet of the pressure regulating means being connected to the connecting channel (93).

12. Valve according to any one of the preceding claims, **characterised in that** the fluid moving the piston (72) has a higher pressure than the fluid which arrives in the chamber (72a) via the channel openings (93a).

13. Valve according to any one of the preceding claims, **characterised in that** only a fluid applies a force to and drives the valve control element (64) or the piston (72) such that the valve control element (64) or the piston (72) moves backwards and forwards alternately between the end positions thereof.

14. Valve according to any one of the preceding claims, **characterised in that** the valve is a 4/2 way valve or a 5/2 way valve, the two valve pump outlets (P_{A}, P_{B}) being interconnected by the valve control element (64) in the end positions and in a middle region.

15. Valve arrangement with a valve according to any one of the preceding claims for alternately filling two working chambers (A, B) of a piston-cylinder system (1, 2, 3) of a pump with a fluid, **characterised in that** the valve (50) is switched by switch-over valves (14) particularly in the form of 3/2 way valves which are actuated by the pump.

16. Valve arrangement according to claim 15, **characterised in that** the movement of the valve control element (64) is braked or decelerated at least during the middle movement phase by means of chokes (66) which are arranged in particular in the switch-over valves (14).

## Revendications

1. L'invention concerne une soupape pour le remplissage alterné de deux chambres de travail (A, B) d'un système piston-cylindre (1, 2, 3) d'une pompe avec un fluide, la soupape présentant deux sorties de pompe à soupape (P_{A}, P_{B}) pour la liaison avec les chambres de travail (A, B) de la pompe, et un élément de commande de soupape (64) disposé coulissant dans une chambre d'un boîtier de soupape (60, 61, 76, 77) et pouvant être déplacé en va-et-vient par un fluide entre deux positions terminales. L'élément de commande de soupape (64) comporte des canaux de commande (67, 82, 83, 84) interagissant avec des canaux de boîtier (51, 71, 98, 80, 81) disposés dans le boîtier de soupape (60), la première sortie de pompe à soupape (P_{A}) étant reliée aux premiers canaux de boîtier (71, 80) et la deuxième sortie de pompe à soupape (P_{B}) étant reliée aux autres canaux de boîtier (98, 81). Dans une partie centrale, entre les deux positions terminales, les sorties de pompe à soupape (P_{A}, P_{B}) sont reliées mutuellement au moyen de canaux de commande (82, 83, 84) de l'élément de commande de soupape (64), **caractérisée en ce qu'**un piston (72), subdivisant une chambre en deux chambres de travail (75, 95) étanche l'une par rapport à l'autre, déplace l'élément de commande de soupape (64) et que l'élément de commande de soupape (64) se situe dans un évidement (72a) du piston (72), auquel cas un procédé d'accouplement mécanique existe, en particulier au moins en direction de mouvement du piston (72) entre le piston (72) et l'élément de commande de soupape (64).

2. Soupape selon la revendication 1, **caractérisée en ce que** l'élément de commande de soupape (64) avec sa surface d'appui (64a) est en appui sous pression et de manière étanche contre une surface d'appui (60a) du boîtier (60), auquel cas des ouvertures de canal (67a, 83a, 84a) des canaux de commande (67, 83, 84) sont agencées sur la surface d'appui (64a) de l'élément de commande de soupape (64) et des ouvertures de canal des canaux de boîtier (51, 80, 81) sont agencées sur la surface d'appui (60a) du boîtier (60).

3. Soupape selon la revendication 2, **caractérisée en ce qu**'au moins un élément à ressort (74) s'appuie au piston (72) et que l'élément de commande de soupape (64) avec sa surface d'appui (64a) est en appui sous pression et de manière étanche contre une surface d'appui (60a) du boîtier (60) ou qu'un fluide met en appui sous pression et de manière étanche l'élément de commande de soupape (64) avec sa surface d'appui (64a) contre une surface d'appui (60a) du boîtier (60).

4. Soupape selon la revendication 1, **caractérisée en ce que** la chambre de l'évidement (72a) est rendue étanche par rapport aux chambres de travail (75, 95) à l'aide respectivement d'au moins un joint d'étanchéité (73).

5. Soupape selon une des revendications de 1 à 4, **caractérisée en ce que** les surfaces d'appui (60a, 64a) sont formées de sorte à être planes.

6. Soupape selon une des revendications de 1 à 5, **caractérisée en ce que** la soupape est formée en tant que soupape à 5/2 voies ou soupape à 4/2 voies, auquel cas le boîtier (60) présente dans la chambre (72a) une ouverture de canal (51a) d'un canal d'échappement (51), une ouverture de canal (80a) du canal de raccordement (81) vers le raccord de soupape (P_{A}), une ouverture de canal (81a) d'un canal de raccordement (81) vers le raccord de soupape (P_{B}) ainsi que deux ouvertures de canal (93a) d'un canal de raccordement (93, 47) vers une entrée de soupape (43, E2).

7. Soupape selon la revendication 6, **caractérisée en ce que** l'élément de commande de soupape (64) présente au moins un, en particulier deux, évidemment(s) s'étendant en direction du mouvement de l'élément de commande de soupape (64) sur la surface d'appui (64a) qui interagit de telle sorte avec les ouvertures (51, 80a, 81a) du boîtier (60) et qu'en outre un canal de raccordement (82, 83, 84) est agencé dans l'élément de commande de soupape (64) qui, dans une partie centrale, dans laquelle se trouve l'élément de commande de soupape (64) entre deux positions terminales, relie mutuellement les canaux de raccordement (80, 81) à un des canaux de raccordement (80, 81) à l'aide d'au moins un évidement (67).

8. Soupape selon la revendication 7, **caractérisée en ce que** dans les phases de mouvement situées entre les positions terminales et la partie centrale, respectivement un des deux canaux de raccordement (80, 81) est en liaison avec le canal d'échappement (51) à l'aide de l'évidement / des évidements (67), auquel cas simultanément l'autre canal de raccordement (81, 80) est en liaison avec le canal de raccordement (93) à travers la chambre (72al, 72ar) débloquées par l'élément de commande de soupape (64).

9. Soupape selon la revendication 8, **caractérisée en ce que** le canal de raccordement (93) présente sur les deux parties frontales de l'évidement (72a) une ouverture d'admission (93a) qui est en liaison en particulier avec, au moins par endroits, les évidements (72kl, 72kr) frontaux du piston (72).

10. Soupape selon une des revendications précédentes, **caractérisée en ce qu**'un dispositif de réglage de pression (45), sous forme de soupape proportionnelle, est agencé dans ou au niveau de la soupape et que la soupape présente une entrée de soupape (43) pour un fluide, en particulier de l'air comprimé, qui est acheminé vers le dispositif de réglage de pression (45) à travers un canal (44), auquel cas la sortie du dispositif de réglage de pression (45) est en liaison avec le canal de raccordement (93) à l'aide d'une conduite de liaison (47).

11. Soupape selon la revendication 10, **caractérisée en ce qu**'au moins un canal de raccordement est agencé dans le boîtier (60) de la soupape qui relie l'entrée de la soupape (43) avec l'entrée du dispositif de réglage de pression, auquel cas la sortie du dispositif de réglage de pression est en liaison avec le canal de raccordement (93).

12. Soupape selon une des revendications précédentes, **caractérisée en ce que** le fluide déplaçant le piston (72) présente une pression plus élevée que le fluide qui pénètre dans la chambre (72a) à travers les ouvertures du canal (93a).

13. Soupape selon une des revendications précédentes, **caractérisée en ce que** l'élément de commande de soupape (64) ou le piston (72) est sollicité et actionné uniquement par un fluide de telle sorte que l'élément de commande de soupape (64) ou le piston (72) peut être déplacé en va-et-vient en alternance entre ses positions terminales.

14. Soupape selon une des revendications précédentes, **caractérisée en ce que** la soupape en une soupape à 4/2 voies ou une soupape à 5/2 voies, auquel cas dans la position terminale et dans la partie centrale les deux sorties de pompe à soupape (P_{A}, P_{B}) sont reliées mutuellement à l'aide de l'élément de commande de soupape (64).

15. Agencement de soupape avec une soupape selon une des revendications précédentes pour le remplissage alterné de deux chambres de travail (A, B) d'un système piston-cylindre (1, 2, 3) d'une pompe avec un fluide, **caractérisé en ce que** la soupape (50) est manoeuvrée à l'aide d'une soupape d'inversion (14) actionnée par la pompe, la soupape d'inversion (14) étant en particulier sous forme d'une soupape à 3/2 voies.

16. Agencement de soupape selon la revendication 15, **caractérisé en ce que** le mouvement de l'élément de commande de soupape (64), au moins pendant la phase de mouvement central, est freiné et/ou ralenti à l'aide d'étrangleurs (66), lesquels sont agencés en particulier dans la soupape d'inversion (14).
